Europäisches Patentamt

European Patent Office

Office européen des brevets

(11) Numéro de publication : **0 507 663 B1**

(12) **FASCICULE DE BREVET EUROPEEN**

(45) Date de publication du fascicule du brevet :
**18.10.95 Bulletin 95/42**

(51) Int. Cl.⁶ : **H02M 1/12, H02M 7/217,
H04B 15/02**

(21) Numéro de dépôt : **92400885.7**

(22) Date de dépôt : **31.03.92**

(54) **Procédé et dispositif pour atténuer l'effet du radioparasitage par conduction sur le réseau alternatif polyphasé.**

(30) Priorité : **05.04.91 FR 9104200**

(43) Date de publication de la demande :
**07.10.92 Bulletin 92/41**

(45) Mention de la délivrance du brevet :
**18.10.95 Bulletin 95/42**

(84) Etats contractants désignés :
**DE GB SE**

(56) Documents cités :
**EP-A- 0 307 719
DE-A- 3 025 405
US-A- 4 384 321**

(56) Documents cités :
**US-A- 4 412 277
PATENT ABSTRACTS OF JAPAN vol. 7, no.
210 (P-223)(1355) 16 Septembre 1983 & JP-
A-58105315**

(73) Titulaire : **ARTUS
Chemin du Champ des Martyrs
F-49240 Avrille (FR)**

(72) Inventeur : **Louarn, Marcel
15 rue du Clos Fleury
F-49220 Vern D'Anjou (FR)**

(74) Mandataire : **Thévenet, Jean-Bruno et al
Cabinet Beau de Loménie
158, rue de l'Université
F-75340 Paris Cédex 07 (FR)**

## Description

La présente invention concerne un procédé pour atténuer l'effet du radioparasitage par conduction sur un réseau alternatif polyphasé alimentant notamment des convertisseurs à découpage.

Il concerne également un dispositif pour la remise en oeuvre de ce procédé principalement destiné à des équipements embarqués à bord d'aéronefs ou bien encore tout type de véhicules terrestres ou navals.

Les convertisseurs à découpage permettent à partir: d'une alimentation fixe, dite source continue, de délivrer à une charge alternativement la tension correspondant à l'un ou l'autre des pôles de la source continue, au rythme de la séquence de hachage, qui peut par exemple s'effectuer à une fréquence de l'ordre de 20 à 100 kHz.

Il est donc demandé à cette source continue des courants impulsionnels qui peuvent être soit toujours de même signe, soit de signes alternés. Les courants impulsionnels circulant dans ce convertisseur à la fréquence de hachage, appelée aussi fréquence de conversion, remontent en partie ou en totalité vers le réseau alternatif à partir duquel cette source continue est obtenue. En outre, la formation particulière de cette source continue, après redressement double alternance à partir du réseau alternatif, est elle-mime génératrice de nombreux harmoniques de la fréquence de ce réseau. Il en résulte une détérioration des formes d'ondes des courants circulant sur le réseau alternatif.

Il est connu, pour éviter le retour vers le réseau alternatif de tous ces courants indésirables, d'insérer sur les lignes de ce réseau, en amont de l'ensemble de redressement, des filtres capables de réduire suffisamment le niveau des perturbations ainsi créées pour répondre aux normes de radioparasitage par conduction existant tant pour la bande harmonique de la fréquence du réseau alternatif que pour la bande harmonique de la fréquence de conversion.

Toutefois, dès que les puissances demandées atteignent quelques kilowatts, le volume et le poids de tels filtres deviennent vite incompatibles avec une utilisation sur des équipements embarqués tels que cités précédemment.

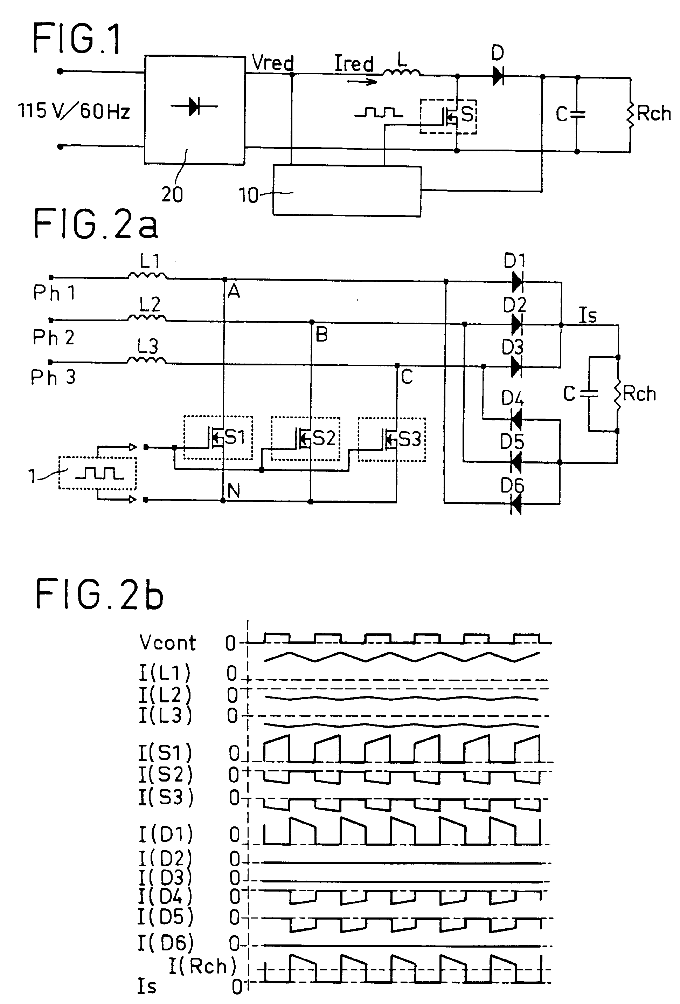

Il est aussi connu, pour un réseau alternatif 115V/60Hz monophasé, de recourir au montage de la figure 1 pour réduire très sensiblement les perturbations dues aux harmoniques de la fréquence de ce réseau. Pour ce faire, un circuit spécifique de contrôle et de commande 10 permet de garantir que la forme du courant circulant dans le réseau monophasé est sinusoïdal et en phase avec la tension de celui-ci

Un tel montage comporte en entrée un circuit de redressement 20 placé directement sur le réseau monophasé et en sortie une charge Rch sur laquelle est placé en parallèle un condensateur tampon C. Une inductance réservoir L et un premier commutateur D (diode) sont disposés en série entre l'une des bornes de sortie du circuit de redressement 20 et l'une des bornes de la charge Rch, l'autre borne de sortie du circuit de redressement 20 étant reliée directement à l'autre borne de la charge Rch. Un second commutateur S commandé par un circuit 10 est placé en parallèle entre le point commun à l'inductance L et le premier commutateur D, et l'autre borne de la charge Rch qui est aussi celle du circuit de redressement 20.

Le circuit 10 qui assure la commande de la séquence de hachage par l'action sur le commutateur S, contrôle également la forme des tensions et courants circulant dans le montage en prélevant ceux-ci en différents points. De par le principe de contrôle utilisé, la forme du courant I red qui circule dans l'inductance L est identique à celle de la tension réseau redressée Vred et pratiquement en phase avec elle. Toutefois, une ondulation triangulaire, dont l'amplitude dépend de la valeur de l'inductance L et de la fréquence de la séquence de hachage, subsiste en superposition de l'onde sinusoïdale.

Il en résulte qu'un tel montage, s'il permet de s'affranchir des perturbations provoquées par les harmoniques de la fréquence réseau, comme pourrait d'ailleurs le montrer une analyse spectrale, ne réussit pas à éliminer celles liées à la fréquence de conversion.

On connaît également par la demande EP 307 719 une alimentation de puissance fonctionnant à partir d'une source alternative triphasée et qui permet une amélioration du facteur de puissance par un contrôle individuel de l'angle d'ouverture des commutateurs.

La présente invention vise a remédier aux inconvénients précités et notamment par un système simple, fiable et peu onéreux à maîtriser les perturbations tant dans la bande harmonique de la fréquence réseau que dans la bande harmonique de la fréquence de conversion.

Ces buts sont atteints grâce à un procédé pour atténuer l'effet du radioparasitage par conduction sur un réseau alternatif polyphasé comportant les étapes suivantes :

a) relier simultanément entres elles, par la conduction de commutateurs Si, des inductances Li, dont l'une des deux extrémités de chaque inductance est connectée à une phase dudit réseau alternatif, pour former une charge inductive montée en étoile afin de permettre un stockage d'énergie dans ces inductances par le courant circulant entre les phases,

b) relier simultanément, par le blocage des commutateurs Si, ces inductances Li à un circuit redresseur afin de restituer à une charge l'énergie précédemment emmagasinée dans les inductances,

c) répéter les étapes a) et b) au rythme d'un circuit de commande définissant des instants de fermeture et d'ouverture des commutateurs Si correspondant respectivement à la liaison des inductances entres elles et à la liaison des inductances avec le circuit redresseur.

L'absence de tout dispositif de contrôle des angles d'ouverture des commutateurs simplifie considérablement leur commande et évite les déséquilibres de puissance pouvant résulter d'une commande indépendante de ces commutateurs.

Le procédé précédent peut être mis en oeuvre à l'aide d'un dispositif tel que pour chaque phase d'un réseau alternatif, il comporte au moins une inductance Li dont l'une des deux extrémités est reliée à une phase dudit réseau alternatif, l'autre extrémité étant reliée, selon l'état d'un commutateur Si défini par un circuit de commande, dans un premier temps, aux inductances Li des autres phases afin de mettre simultanément les inductances en court-circuit, formant une charge inductive montée en étoile, et ainsi permettre un stockage d'énergie dans ces inductances et dans un second temps, à un circuit redresseur afin de restituer à une charge l'énergie précédemment emmagasinée dans les inductances.

Avantageusement, le circuit de commande est un générateur de signaux rectangulaires de rapport cyclique fixe et déterminé suivant le rapport souhaité entre la tension entre phases et la tension aux bornes de la charge.

De préférence, le dispositif comporte une inductance Li par phase dudit réseau alternatif et ledit circuit redresseur est un montage redresseur double alternance comportant deux éléments de redressement Di pour chacune desdites inductances Li.

Selon un autre mode particulier de réalisation, le dispositif comporte deux ensembles identiques disposés en parallèle comportant chacun une inductance Li par phase dudit réseau alternatif, ledit circuit redresseur étant un montage redresseur double alternance comportant deux éléments de redressement Di pour chacune desdites inductances Li de chaque ensemble, et lesdits commutateurs Si d'un ensemble étant commandés simultanément mais en opposition de phase avec lesdits commutateurs de l'autre ensemble.

Dans ce mode de réalisation, lorsque notamment le rapport cyclique des signaux de commande est égal à 0,5, le radioparasitage est totalement éliminé.

Selon une caractéristique particulière préférentielle de l'invention, lesdits commutateurs Si forment entre eux un montage en étoile dont chaque branche est reliée au point commun (A,B,C,D,E,F) existant entre chacune desdites inductances Li et au moins un élément de redressement Di.

Toutefois, à titre d'alternative, pour certains modes de réalisation particuliers, lesdits commutateurs Si forment entre eux un montage polygonal dont chaque branche relie entre eux deux des points communs (A,B,C,D,E,F) existant entre chacune desdites inductances Li et au moins un desdits éléments de redressement Di.

D'autres caractéristiques et avantages de la présente invention ressortiront plus directement à la lecture de la description qui va suivre faite en référence aux dessins annexés sur lesquels :

- la figure 1 représente un exemple de réalisation de l'art antérieur,
- les figures 2a et 2b représentent respectivement le schéma d'un exemple de réalisation selon l'invention et les différentes formes d'ondes qui correspondent à ce schéma,
- les figures 3a et 3b représentent respectivement le schéma d'un exemple de réalisation préférentielle selon l'invention et les différentes formes d'ondes qui correspondent à ce schéma,
- la figure 4 montre un autre exemple de réalisation selon l'invention, et
- la figure 5 montre encore un autre exemple de réalisation selon l'invention.

On se réfère maintenant aux dessins et en particulier aux figures 2a et 2b qui représentent respectivement un exemple de réalisation selon l'invention et les formes d'ondes y associées.

Trois inductances L1, L2, L3 placées sur chacune des phases Ph1, Ph2 et Ph3 d'un réseau alternatif triphasé sont reliées par l'intermédiaire d'un pont de diodes D1 à D6 hexaphasé à une charge Rch à laquelle est relié en parallèle un condensateur-tampon C. Trois interrupteurs commandés, S1, S2, S3 montés en étoile sont reliés respectivement à chaque ligne du réseau alternatif au niveau des points communs entre les inductances L1, L2, L3 et les diodes D1 à D6 du pont hexaphasé. Un circuit de commande 1 est disposé entre le point neutre N de ce montage étoile et l'entrée de commande de chaque interrupteur S1 à S3.

Ce dispositif présente deux temps de fonctionnement selon que les interrupteurs S1 à S3 sont en position ouvert ou fermé. Pour les formes d'ondes représentées à la figure 2b, il est supposé que la charge des inductances s'effectue sur la crète positive du courant de la phase Ph1 et que le signal rectangulaire continu Vcont délivré par le circuit de commande 1 est de rapport cyclique n égal à 0,5. La fréquence de ce signal, qui est la fréquence de conversion du dispositif est beaucoup plus élevée que celle du réseau alternatif, de 50 à 250 fois supérieure par exemple.

Premier temps : interrupteurs S1 à S3 fermés.

Les trois inductances L1 à L3 sont reliées au point N du montage étoile formé par les trois interrupteurs S1 à S3 et forment alors une charge triphasée équilibrée (on supposera L1, L2 et L3 identiques). Le courant Is dans la charge et les courants I(D1) à I(D6) dans les diodes D1 à D6 sont nuls. Les inductances L1 à L3 se chargent et le courant qui traverse ces inductances ainsi que les interrupteurs S1 à S3 augmente en valeur absolue. Les courants I(L1) et I(S1) croissent linéairement (on supposera les inductances parfaites) tandis que les courants I(L2), I(S2) et I(S3), I(S3) décroissent également linéairement mais avec une pente moitiée (I(L2)=I(L3) dans le cas de figure choisie mais plus généralement I((L1)=I(L2)+I(L3) avec I(L2)=I(L3)). L'énergie emmagasinée par chaque inductance à l'instant précédant l'ouverture des interrupteurs (début de la phase 2) est donnée par l'expression :

$$W = 0,5 \ LI^2$$ où I est le courant dans L à l'instant de l'ouverture.

La somme des courants aboutissant au point neutre N étant nulle à tout instant dans un tel système triphasé équilibré, on peut montrer que l'énergie totale emmagasinée par les inductances est alors constante et égale à $0,75 \ L \ Imax^2$.

Second temps : interrupteurs S1 à S3 ouverts.

La tension aux bornes des inductances s'inverse et celles-ci restituent à la charge l'énergie emmagasinée pendant le temps précédent. Les courants I(S1) à I(S3) s'annulent et le courant traversant les inductances diminue en valeur absolue. Le courant I(L1) décroît linéairement et les courants I(L2) et I(L3) croissent également linéairement mais toujours avec une pente moitiée. Suivant les positions réciproques des phases Ph1, Ph2 et Ph3, il se développera entre les noeuds A,B et C des tensions tantôt positives tantôt négatives. Le pont de diode assurant une tension toujours de même signe dans la charge, laissera passer le courant dans celle-ci au travers de trois diodes du pont.

La figure 2b montre le cas où ce courant parvient à la charge au travers des diodes D1, D4 et D5. La valeur des tensions entre noeuds va dépendre du rapport de durée entre les deux temps de fonctionnement (égal à 1 dans le cas d'un rapport cyclique n égal à 0,5) ainsi que de la résistance de charge appliquée au montage. Un équilibre sera atteint lorsque la somme des énergies emmagasinées dans les inductances sera égale à l'énergie absorbée par la charge. Si les énergies emmagasinées sont suffisant:es, la tension de sortie, au niveau de la charge Rch, sera alors pratiquement identique à la tension entre phases. Si le rapport cyclique n est différent de 0,5, cette tension de sortie sera alors donnée par la formule :

V(sortie) = V(entre phases)/n      avec 0<n<1

La pente des différents courants traversant les inductances dépend également de ce rapport cyclique, de même que la valeur du courant continu I ch traversant la charge.

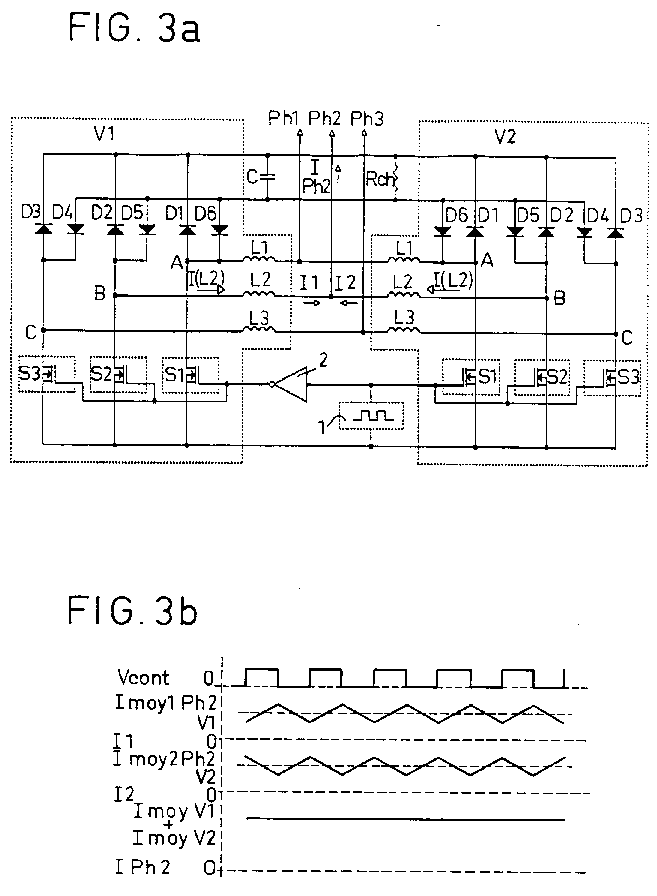

La figure 3a montre un exemple de réalisation préférentielle selon l'invention dans laquelle deux montages identiques du type de la figure 2a sont associés. Ils forment un premier et un second ensembles (voie 1 et voie 2) dispersés en parallèle entre un réseau triphasé Ph1, Ph2 et Ph3 et une charge Rch en parallèle, elle mime, avec un condensateur tampon C. Un inverseur 2 permet de délivrer au second ensemble le même signal que celui délivré par le circuit de commande 1 au premier, mais en opposition de phase.

La figure 3b montre la forme des signaux suivants en fonction du temps : tension continue (Vcont) délivrée par le circuit de commande 1 présentant la forme de créneaux rectangulaires, courant moyen dans la phase 2 de la voie 1(Imoy1 Ph2) présentant une forme triangulaire, courant moyen dans la phase 2 de la voie 2 (Imoy 2 Ph2) présentant une forme triangulaire complémentaire de celle de la voie 1, somme des courants moyens de la phase 2 dans les voies 1 et 2 (Imoy V1 + Imoy V2).

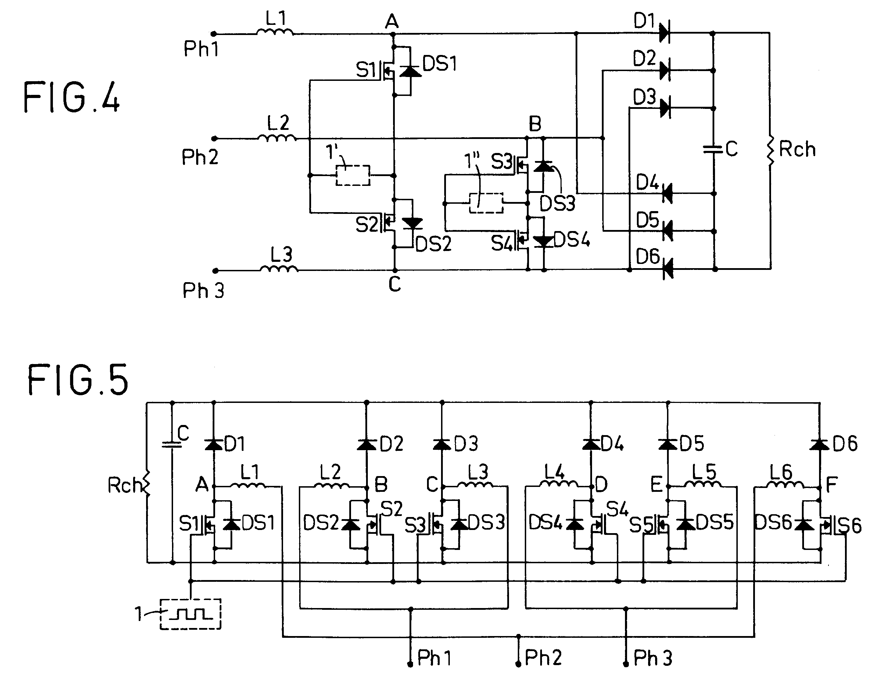

La figure 4 montre un autre exemple de réalisation selon l'invention. Cette réalisation permet l'obtention de résultats analogues à ceux obtenus par le montage de la figure 2a avec une structure légèrement différente. En effet, les trois interrupteurs commandés S1 à S3 du montage de la figure 3a sont remplacés par quatre interrupteurs S1-S2 et S3-S4, montés deux à deux tête-bêche entre deux phases, pour réaliser un montage en triangle de mise en court-circuit du point neutre. Il est à noter que le choix des phases est indifférent, 1-3 et 2-3 dans l'exemple de la figure 4, et qu'il n'est pas nécessaire de refermer le triangle pour réaliser le fonctionnement désiré. Des diodes drain-source DS1 à DS4 sont montées en parallèle sur les interrupteurs S1 à S4 qui peuvent être par exemple du type MOSFET ou IGBT.

Le circuit de commande 1 du montage de la figure 2a est remplacé par les circuits de commande séparés 1' et 1" qui permettent la commande simultanée des interrupteurs.

La figure 5 montre encore un autre exemple de réalisation selon l'invention. Les trois inductances sont remplacées par six inductances L1 à L6 reliées deux à deux par l'une de leurs extrémités à une phase du réseau alternatif triphasé. Le pont de diodes hexaphasé qui permettait le redressement des signaux sans nécessité de référence fixe est remplacé par un redresseur simple alternance à six diodes (D1 à D6) reliées à une borne de la charge Rch. Le retour du courant aux phases s'effectue maintenant au travers des diodes Drain-Source DS1 à DS6 placées sur chaque interrupteur S1 à S6.

De tels montages trouvent avantageusement application en prérégulation de toute conversion d'énergie sur le réseau alternatif notamment 400Hz triphasé. Ainsi, dans le domaine des convertisseurs alternatif-continu de génération de sources basse tension ou bien encore celui des convertisseurs alternatifs-alternatifs.

Bien entendu, il n'a été fait ici état que de quelques réalisations et l'homme de l'art pourra tout en restant dans le cadre de l'invention réaliser d'autres montages présentant les mêmes caractéristiques. Des circuits redresseurs simple ou double alternance, des circuits à Thyristors pourront avantageusement être employés en remplacement des montages précédement décrits.

**Revendications**

1. Procédé pour atténuer l'effet du radioparasitage par conduction sur un réseau alternatif polyphasé, caractérisé en ce qu'il comporte les étapes suivantes :

   a) - relier simultanément entres elles, par la conduction de commutateurs (Si), des inductances (Li), dont l'une des deux extrémités de chaque inductance est connectée à une phase dudit réseau alternatif, pour former une charge inductive montée en étoile afin de permettre un stockage d'énergie dans ces inductances par le courant circulant entre les phases,

   b) - relier simultanément, par le blocage des commutateurs (Si), ces inductances (Li) à un circuit redresseur afin de restituer à une charge l'énergie précédemment emmagasinée dans les inductances,

   c) - répéter les étapes a) et b) au rythme d'un circuit de commande (1) définissant des instants de fermeture et d'ouverture des commutateurs (Si) correspondant respectivement à la liaison des inductances entres elles et à la liaison des inductances avec le circuit redresseur.

2. Dispositif pour la mise en oeuvre du procédé selon la revendication 1 comportant, pour chaque phase d'un réseau alternatif, au moins une inductance (Li) dont l'une des deux extrémités est reliée à une phase dudit réseau alternatif, caractérisé en ce que l'autre extrémité est reliée, selon l'état d'un commutateur (Si) défini par un circuit de commande (1), dans un premier temps aux inductances (Li) des autres phases afin de mettre simultanément les inductances en court-circuit, formant une charge inductive montée en étoile, et ainsi permettre un stockage d'énergie dans ces inductances et dans un second temps à un circuit redresseur afin de restituer à une charge l'énergie précédemment emmagasinée dans les inductances.

3. Dispositif selon la revendication 2, caractérisé en ce que ledit circuit de commande (1) consiste en un générateur de signaux rectangulaires de rapport cyclique fixe et déterminé suivant le rapport souhaité entre la tension entre phases et la tension aux bornes de la charge.

4. Dispositif selon l'une des revendications 2 et 3, caractérisé en ce qu' il comporte une inductance (Li) par phase dudit réseau alternatif et en ce que ledit circuit redresseur est un montage redresseur double alternance comportant deux éléments de redressement (Di) pour chacune desdites inductances (Li).

5. Dispositif selon l'une des revendications 2 et 3 caractérisé en ce qu'il comporte deux inductances (Li) par phase dudit réseau alternatif et en ce que ledit circuit redresseur comporte un élément de redressement (Di) pour chacune desdites inductances (Li).

6. Dispositif selon l'une des revendications 2 et 3 caractérisé en ce qu'il comporte deux ensembles identiques disposés en parallèle comportant chacun, une inductance (Li) par phase dudit réseau alternatif, ledit circuit redresseur étant un montage redresseur double alternance comportant deux éléments de redressement (Di) pour chacune desdites inductances (Li) de chaque ensemble et en ce que lesdits commutateurs (Si) d'un ensemble sont commandés simultanément mais en opposition de phase avec lesdits commutateurs (Si) de l'autre ensemble.

7. Dispositif selon l'une quelconque des revendications 2 à 6, caractérisé en ce que lesdits commutateurs (Si) forment entre eux un montage en étoile dont l'extrémité libre de chaque branche est reliée au point commun (A,B,C,D,E,F) existant entre chacune desdites inductances (Li) et au moins un élément de redressement (Di).

8. Dispositif selon l'une quelconque des revendications 2 à 6, caractérisé en ce que lesdits commutateurs (Si) forment entre eux un montage polygonal dont chaque branche relie entre eux deux des points communs (A,B,C,D,E,F) existant entre chacune desdites inductances (Li) et au moins un desdits éléments de redressement (Di).

9. Dispositif selon l'une quelconque des revendications 2 à 8, caractérisé en ce que ledit réseau alternatif est un réseau alternatif triphasé 400Hz.

10. Dispositif selon l'une quelconque des revendications 2 à 9, caractérisé en ce que le rapport cyclique des signaux délivrés par le circuit de commande (1) est égal à 0,5.

**Patentansprüche**

1. Verfahren zum Dämpfen des Funkstörungseffekts durch Leitung in einem mehrphasigen Wechselstromnetz, dadurch gekennzeichnet, daß es aus den folgenden Schritten besteht:
   a) gleichzeitiges Verbinden der Induktivitäten (Li) untereinander durch die Leitung von Schaltern (Si), wobei das eine der zwei Enden jeder Induktivität mit einer Phase des genannten Wechselstromnetzes verbunden ist, um ein induktives Ladungselement zu bilden, das sternförmig aufgebaut ist, so daß in diesen Induktivitäten durch den zwischen den Phasen fließenden Strom ein Speichern von Energie ermöglicht wird,
   b) gleichzeitiges Verbinden dieser Induktivitäten (Li) mit einer Gleichrichterschaltung durch das Sperren der Schalter (Si), um die zuvor in den Induktivitäten gespeicherte Energie an ein Ladungselement abzugeben,
   c) Wiederholen der Schritte a) und b) im Rhythmus eines Steuerkreises (1), der Schließ- und Öffnungszeitpunkte der Schalter (Si) bestimmt, die jeweils der Verbindung der Induktivitäten untereinander bzw. der Verbindung der Induktivitäten mit der Gleichrichterschaltung entsprechen.

2. Vorrichtung zur Durchführung des Verfahrens nach Anspruch 1, die für jede Phase eines Wechselstromnetzes mindestens eine Induktivität (Li) aufweist, deren eines von zwei Enden mit einer Phase des genannten Wechselstromnetzes verbunden ist,
   dadurch gekennzeichnet, daß das andere Ende je nach dem durch einen Steuerkreis (1) bestimmten Zustand eines Schalters (Si) in einer ersten Periode mit den Induktivitäten (Li) der anderen Phasen verbunden wird, um die Induktivitäten gleichzeitig kurzzuschließen, wobei ein induktives Ladungselement gebildet wird, das sternförmig aufgebaut ist,
   und auf diese Weise ein Speichern von Energie in diesen Induktivitäten ermöglicht wird, und in einer zweiten Periode mit einer Gleichrichterschaltung verbunden wird, um die zuvor in den Induktivitäten gespeicherte Energie an ein Ladungselement abzugeben.

3. Vorrichtung nach Anspruch 2,
   dadurch gekennzeichnet, daß der genannte Steuerkreis (1) aus einem Signalgeber für Rechtecksignale mit festem zyklischen Verhältnis besteht, das entsprechend dem gewünschten Verhältnis zwischen der Dreieckspannung und der Spannung an den Klemmen des Ladungselements bestimmt wird.

4. Vorrichtung nach einem der Ansprüche 2 und 3, dadurch gekennzeichnet, daß sie eine Induktivität (Li) pro Phase des genannten Wechselstromnetzes aufweist, und daß die genannte Gleichrichterschaltung eine Vollweg-Gleichrichterschaltung mit zwei Gleichrichtelementen (Di) für jede der genannten Induktivitäten (Li) ist.

5. Vorrichtung nach einem der Ansprüche 2 und 3, dadurch gekennzeichnet, daß sie zwei Induktivitäten (Li) pro Phase des genannten Wechselstromnetzes aufweist und daß die genannte Gleichrichterschaltung ein Gleichrichtelement (Di) für jede der genannten Induktivitäten (Li) aufweist.

6. Vorrichtung nach einem der Ansprüche 2 und 3, dadurch gekennzeichnet, daß sie zwei identische, parallel geschaltete Einheiten aufweist, die jeweils eine Induktivität (Li) pro Phase des genannten Wechselstromnetzes aufweisen, wobei die genannte Gleichrichterschaltung eine Vollweg-Gleichrichterschaltung mit zwei Gleichrichtelementen (Di) für jede der genannten Induktivitäten (Li) jeder Einheit ist, und die genannten Schalter (Si) einer Einheit gleichzeitig, aber in umgekehrter Phase mit den genannten Schaltern (Si) der anderen Einheit gesteuert werden.

7. Vorrichtung nach einem der Ansprüche 2 bis 6, dadurch gekennzeichnet, daß die genannten Schalter (Si) miteinander eine Sternschaltung bilden, bei der das freie Ende jedes Arms mit dem gemeinsamen Punkt (A, B, C, D, E, F) verbunden ist, der zwischen jeder der genannten Induktivitäten (Li) und mindestens einem Gleichrichtelement (Di) vorhanden ist.

8. Vorrichtung nach einem der Ansprüche 2 bis 6, dadurch gekennzeichnet, daß die genannten Schalter (Si) miteinander eine polygonale Schaltung bilden, bei der jeder Arm zwei der gemeinsamen Punkte (A, B, C, D, E, F) zwischen jeder der genannten Induktivitäten (Li) und mindestens einem der genannten Gleichrichtelemente (Di) miteinander verbindet.

9. Vorrichtung nach einem der Ansprüche 2 bis 8, dadurch gekennzeichnet, daß das genannte Wechselstromnetz ein dreiphasiges 400 Hz-Wechselstromnetz ist.

10. Vorrichtung nach einem der Ansprüche 2 bis 9, dadurch gekennzeichnet, daß das zyklische Verhältnis der Signale, die von dem Steuerkreis (1) abgegeben werden, gleich 0,5 ist.

## Claims

1. Method for attenuating the effect of the radio interference by conduction on a multi-phase alternating network, characterized in that it includes the following stages:

   a) - simultaneously, by the conduction of switches (Si), linking together inductors (Li), in which one of the two ends of each inductor is connected to one phase of the said alternating network, in order to form a star-mounted inductive load so as to allow energy storage in these inductors by the current flowing between the phases,

   b) - simultaneously, by turning off the switches (Si), linking these inductors (Li) to a rectifier circuit so as to restore the energy previously stored in the inductors to a load,

   c) - repeating stages a) and b) at the rate of a control circuit (1) defining instants of closing and of opening of the switches (Si) corresponding respectively to linking the inductors together and to linking the inductors with the rectifier circuit.

2. Device for implementing the method according Claim 1, including, for each phase of an alternating network, at least one inductor (Li) one of the two ends of which is linked to one phase of the said alternating network, characterized in that the other end is linked, according to the state of a switch (Si) defined by a control circuit (1), in a first time period to the inductors (Li) of the other phases so as simultaneously to place the inductors in short-circuit, forming a star-mounted inductive load, and thus to allow energy storage in these inductors and, in a second time period, to a rectifier circuit as to restore the energy previously stored in the inductors to a load.

3. Device according to Claim 2, characterized in that the said control circuit (1) consists of a generator of rectangular signals with fixed duty cycle determined according to the desired ratio between the voltage between phases and the voltage at the terminals of the load.

4. Device according to one of Claims 2 and 3, characterized in that it includes one inductor (Li) per phase of the said alternating network, and in that the said rectifier circuit is a full-wave rectifier layout including two rectifying elements (Di) for each of the said inductors (Li).

5. Device according to one of Claims 2 and 3, characterized in that it includes two inductors (Li) per phase of the said alternating network, and in that the said rectifier circuit includes a rectifying element (Di) for each of the said inductors (Li).

6. Device according to one of Claims 2 and 3, characterized in that it includes two identical assemblies arranged in parallel each including one inductor (Li) per phase of the said alternating network, the said rectifier circuit being a full-wave rectifier layout including two rectifying elements (Di) for each of the said inductors (Li) of each assembly, and in that the said switches (Si) of an assembly are driven simultaneously but in phase opposition with the said switches (Si) of the other assembly.

7. Device according to any one of Claims 2 to 6, characterized in that the said switches (Si) form a star layout between them, in which the free end of each branch is linked to the common point (A,B,C,D,E,F) existing between each of the said inductors (Li) and at least one rectifying element (Di).

8. Device according to any one of Claims 2 to 6, characterized in that the said switches (Si) form a polygonal layout between them, in which each branch links together two of the common points (A,B,C,D,E,F) existing between each of the said inductors (Li) and at least one of the said rectifying elements (Di).

9. Device according to any one of Claims 2 to 8, characterized in that the said alternating network is a three-phase 400 Hz alternating network.

10. Device according to any one of Claims 2 to 9, characterized in that the duty cycle of the signals delivered by the control circuit (1) is equal to 0.5.

# FIG.1

115 V/60 Hz

Vred    Ired    L    D    C    Rch

20    10

# FIG.2a

Ph 1    L1    A    D1
Ph 2    L2    B    D2    Is
Ph 3    L3    C    D3    C    Rch
D4
S1    S2    S3    D5
1    N    D6

# FIG.2b

Vcont
I(L1)
I(L2)
I(L3)
I(S1)
I(S2)
I(S3)
I(D1)
I(D2)
I(D3)
I(D4)
I(D5)
I(D6)
I(Rch)
Is

# FIG. 3a

# FIG. 3b

# FIG.4

EP 0 507 663 B1

# FIG.5